# EUROPEAN PATENT APPLICATION

(11) **EP 4 786 808 A1**
(43) Date of publication of application: **05.08.2026**
(21) Application number: 26152725.3
(22) Date of filing: 19.01.2026
(51) Int. Cl.: F16C 17/03, F16C 19/52, F16C 33/10, F16C 37/00

(54) **EDM LEADING-EDGE GROOVE BEARING**

(30) Priority: 30.01.2025 US 202563751494 P; 13.01.2026 US 202619447447
(71) Applicant: Ingersoll-Rand Industrial U.S., Inc., Davidson, NC 28036 (US)
(72) Inventor: Tierney, William, Depew, NY (US); Lynah, Patrick, Amherst, NY (US); Austin, Andrew, Orchard Park, NY (US)
(74) Representative: Murgitroyd & Company

(57) **Abstract**

An Electrical Discharge Machined (EDM) bearing (120) is provided. The EDM bearing (120) comprises a housing (122) extending around a rotational axis (100X), the housing defining at least one lubricant port (130) connected to an outer circumference of the housing and extending radially to the rotational axis. An EDM flexing pivot pad (128) is machined from the housing (122), the EDM flexing pivot pad configured to provide support to a rotating shaft (110) rotating around the rotational axis (100X) in a first direction. The EDM flexing pivot pad (128) has a lubricant channel (134) aligned with the lubricant port (130). A leading-edge groove (140) is machined on an inner circumference (116) of the EDM flexing pivot pad (128) and in fluid communication with the lubricant channel (134), the leading-edge groove configured to deliver lubricant to the rotating shaft (110). A compressor system including the EDM bearing is also provided.

## Description

### BACKGROUND

Bearings reduce friction between moving parts and constrain relative motion to desired directions. Mechanical systems such as rotary machines (e.g., motors, generators, compressors, etc.) use rotary bearings to allow shafts or axles to rotate freely around a fixed axis. Rotary bearings transfer axial and radial loads from the source of the load to the structure supporting it.

Rotary machines such as compressor systems use rotary bearings to reduce friction and distribute loads of rotating shafts. For example, rotary bearings used in drive systems of centrifugal compressors or rotary screw compressors may be disposed to support a pinion shaft of the drive system.

A tilting pad journal bearing (TBJB) is a fluid-film bearing that uses a coating of lubricant between the bearing and the rotating component (e.g., a rotating shaft). TBJBs may include curved segments or pads that are connected to pivoting points of a bearing housing. TBJBs include lubrication ports disposed between each pad pair. Typically, the pads are assembled to the bearing housing, resulting in a stack-up of tolerances when the pads are assembled to one another. Consequently, these bearings do not allow for tighter tolerances and require more maintenance to prevent and correct mechanical failure. The lubricant in TBJBs is delivered between the pad pairs and the rotating shaft in a mixing cavity, where hot lubricant in contact with the pads and the shaft and cool lubricant delivered by a lubricant port are mixed to cool the hot lubricant. However, this mixing of hot and cool lubricant is not an effective way of directing heat away from the pads.

The present disclosure is directed to a leading-edge groove (LEG) bearing having Electrical Discharge Machined (EDM) flexing pivot pads. A bearing housing includes a casing section and a pad section machined from the same bearing housing. The pad section includes a LEG disposed on the leading edge of an inner circumference of a respective pad. The LEG is configured to deliver a lubricant to a rotating shaft supported by the bearing, where the lubricant is delivered directly between the respective pad and the rotating shaft, resulting in a reduction of the operating temperature of rotating shaft. Additionally, positioning the groove on the leading edge of the pad provides a lubricant barrier that prevents hot lubricant transfer from an adjacent pad, where the adjacent pad was previously in contact with the rotating shaft, thereby transferring heat away from the pads.

The pad section of the bearing includes flex pivot pads machined from a common housing element of the bearing. EDM machined pads allow the bearing to have tighter tolerances and minimizes mechanical failure of the bearing by eliminating extraneous parts such as tilting pads. The bearing of the present disclosure thus allows for more exact bearing clearances and a more consistent performance.

### SUMMARY

According to a first aspect of the present invention there is provided an Electrical Discharge Machined (EDM) bearing comprising:
a housing extending around a rotational axis, the housing defining at least one lubricant port connected to an outer circumference of the housing and extending radially to the rotational axis;
an EDM flexing pivot pad machined from the housing, the EDM flexing pivot pad configured to provide support to a rotating shaft rotating around the rotational axis in a first direction, the EDM flexing pivot pad having a lubricant channel aligned with the lubricant port; and
a leading-edge groove machined on an inner circumference of the EDM flexing pivot pad and in fluid communication with the lubricant channel, the leading-edge groove configured to deliver lubricant to the rotating shaft.

Preferably, the leading-edge groove is disposed on a leading edge of the EDM flexing pivot pad, and the lubricant is delivered directly between the rotating shaft and the EDM flexing pivot pad.

Preferably, the lubricant channel includes a casing channel defined through a casing section of the housing, and a pad channel defined through the EDM flexing pivot pad, and where the casing channel and the pad channel are coupled by a connecting nozzle.

Preferably, the connecting nozzle is directly machined into the EDM flexing pivot pad.

The EDM bearing may further include a seal plate configured to retain the lubricant flowing through the EDM flexing pivot pads.

Preferably, an internal radius of the seal plate with reference to the rotational axis is greater than an internal radius of the EDM flexing pivot pad with reference to the rotational axis.

The EDM bearing may further comprise a sleeve disposed between the EDM flexing pivot pad and the rotating shaft.

Preferably, the sleeve includes a sleeve groove aligned with the leading-edge groove, the sleeve groove configured to evacuate the lubricant flooding the leading-edge groove towards the seal plate.

According to a second aspect of the present invention there is provided a compressor system comprising:
a compressor airend configured to be rotated around a rotational axis; and
a drive system configured to drive the compressor airend, the drive system including:
   a rotating shaft coupled to the compressor airend, and
   an Electrical Discharge Machined (EDM) bearing according to the first aspect, the EDM bearing configured to support the rotating shaft.

### DRAWINGS

The Detailed Description is described with reference to the accompanying figures. The use of the same reference numbers in different instances in the description and the figures may indicate similar or identical items.
FIG. 1 is an isometric view of a drive system in a compressor assembly including an electrical discharge machined (EDM) bearing having a leading-edge groove (LEG) in accordance with example embodiments of the present disclosure.

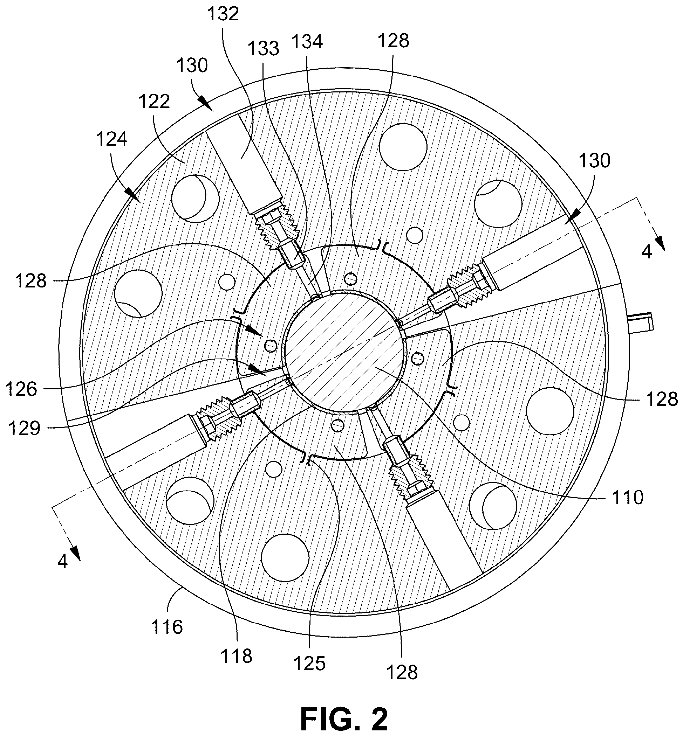

FIG. 2 is a cross-sectional view of the EDM bearing of FIG. 1 along line 2-2 in accordance with example embodiments of the present disclosure.
FIG. 3 is a close-up of the cross-sectional view of the EDM bearing of FIG. 1 along line 3-3 in accordance with example embodiments of the present disclosure.
FIG. 4 is a partial cross-sectional view of the EDM bearing of FIG. 2 along line 4-4 in accordance with example embodiments of the present disclosure.
FIG. 5 is an enlarged view of the cross-section of the EDM bearing of FIG. 4 within circle 5 in accordance with example embodiments of the present disclosure.
FIG. 6 is an enlarged view of the cross-section of the EDM bearing of FIG. 1 along line 6-6, in accordance with example embodiments of the present disclosure.
FIG. 7 is a diagram of a compression system employing an electrical discharge machined (EDM) bearing having a leading-edge groove (LEG) in accordance with example embodiments of the present disclosure.

### DETAILED DESCRIPTION

Although the subject matter has been described in language specific to structural features and/or process operations, it is to be understood that the subject matter defined in the appended claims is not necessarily limited to the specific features or acts described above. Rather, the specific features and acts described above are disclosed as example forms of implementing the claims.

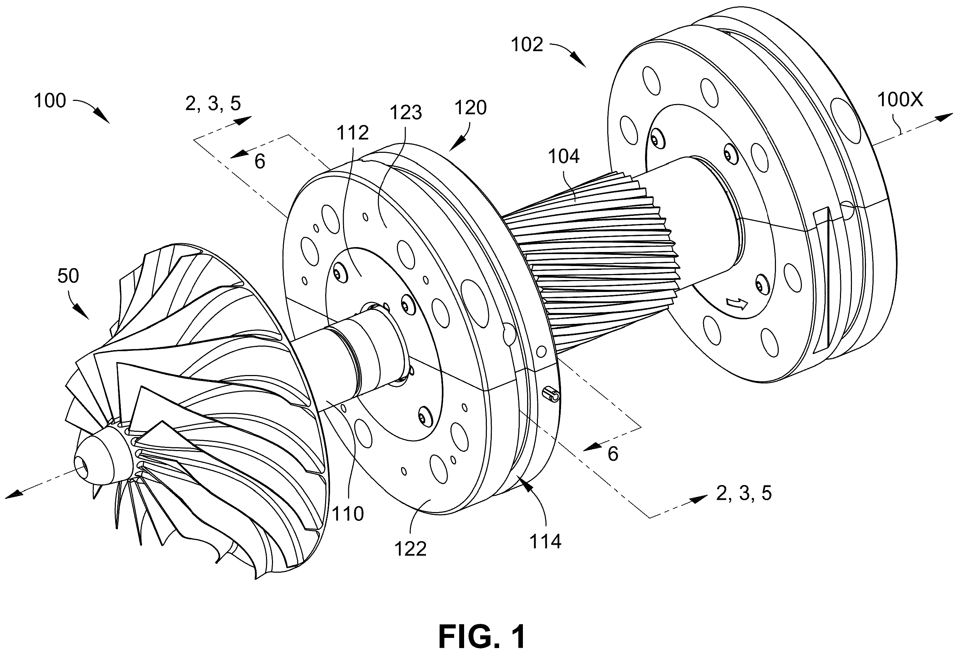

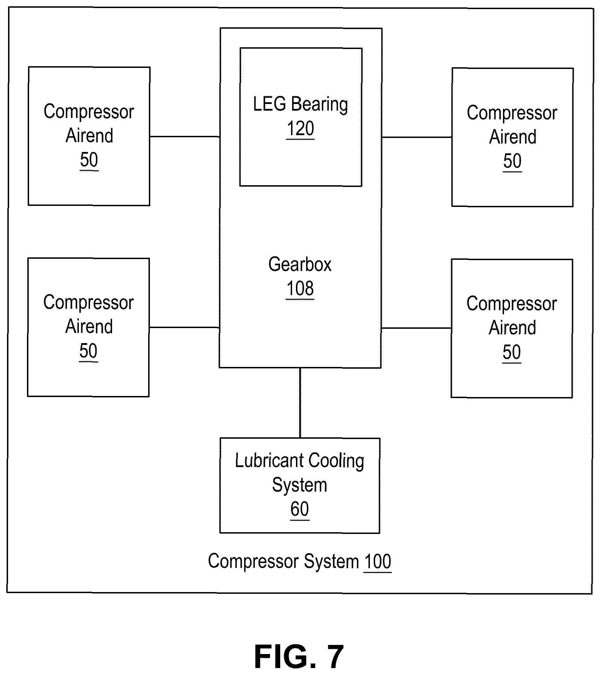

Referring to FIGS. 1 and 7, a compressor system 100 having at least one compressor airend 50 and a drive system 102 is shown. The drive system 102 includes a gearbox 108 configured to drive a rotating shaft 110 around a rotating axis 100X. In embodiments, the gearbox 108 includes at least one pinion 104, and an electrical discharge machined (EDM) bearing 120 having a leading-edge groove (LEG). The gearbox 108 may include a gearbox housing and a bull gear, where the bull gear is configured to drive the at least one pinion 104.

The EDM bearing 120 is configured to support rotation of the shaft 110 while minimizing friction between the shaft 110 and the bearing 120. It should be understood that, although the example embodiment discusses the EDM bearing 120 as a part of a drive system 102 in a compressor system 100, the EDM bearing 120 may be employed in other applications where a rotating shaft is used, for example, in a rotary machine such as a motor, a generator, a pump, or the like. In the example embodiments shown, the bearing is a journal bearing.

The EDM bearing 120 includes a bearing housing 122 and a seal plate 112 disposed at a distal end 123 of the bearing housing 122. The bearing housing 122 includes an outer surface 116, an inner surface 118, a casing section 124 (e.g., a portion of the bearing housing 122) and a pad section 126 (e.g., a portion of the bearing housing 122, including the pads). The inner surface 118 of the bearing housing 122 is proximate to the rotating shaft 110. As shown in FIG. 1, the bearing housing 122 includes a lubrication ring 114 defined on the circumference of the outer surface 116. The lubrication ring 114 is fluidly connected to gearbox ports (not shown) of a lubricant cooling system 60 supplying lubrication to the gearbox 108, which thereby supplies lubricant to the EDM bearing 120.

The pad section 126 includes at least one flexing pivot pad 128 machined through electrical discharge machining (EDM) as a unitary piece, making the flexing pivot pad 128 integral to the casing section 124 of the bearing housing 122. A flex pivot stem 125 machined between the casing section 124 and the pad section 126 connects the two bearing sections (the casing section 124 and the pad section 126) together. The flex pivot stem 125 allows the flexing pivot pad to dynamically support the rotating shaft 110 based on the applied loads on the shaft during operation. In the embodiment shown, the pad section 126 includes four (4) flexing pivot pads 128 having a cavity 129 formed between pairs of flexing pivot pads 128. In other embodiments (not shown), the pad section 126 may include one or more flexing pivot pads 128 that substantially surround and support the surface of the rotating shaft 110. For example, the pad section 126 may include two (2) flexing pivot pads 128, three (3) flexing pivot pads 128, five (5) flexing pivot pads 128, and so on.

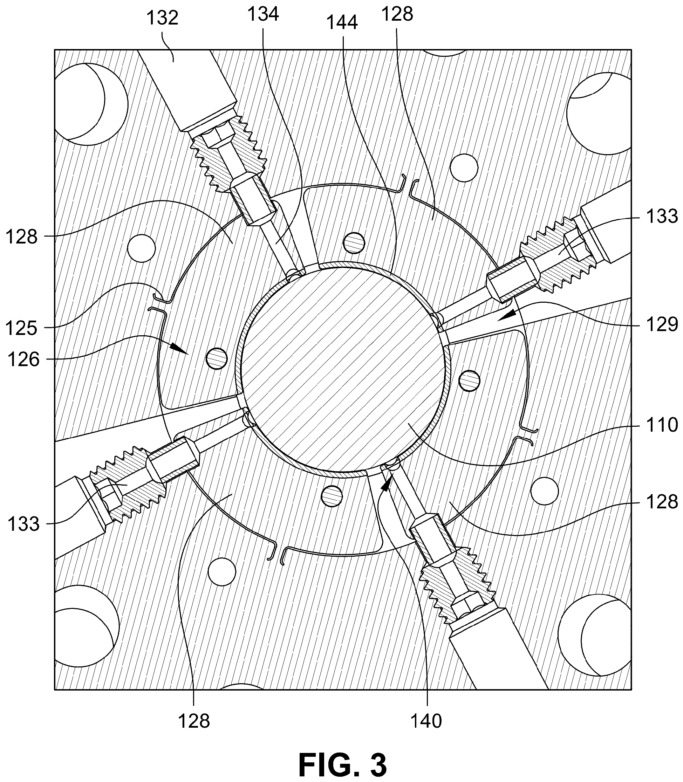

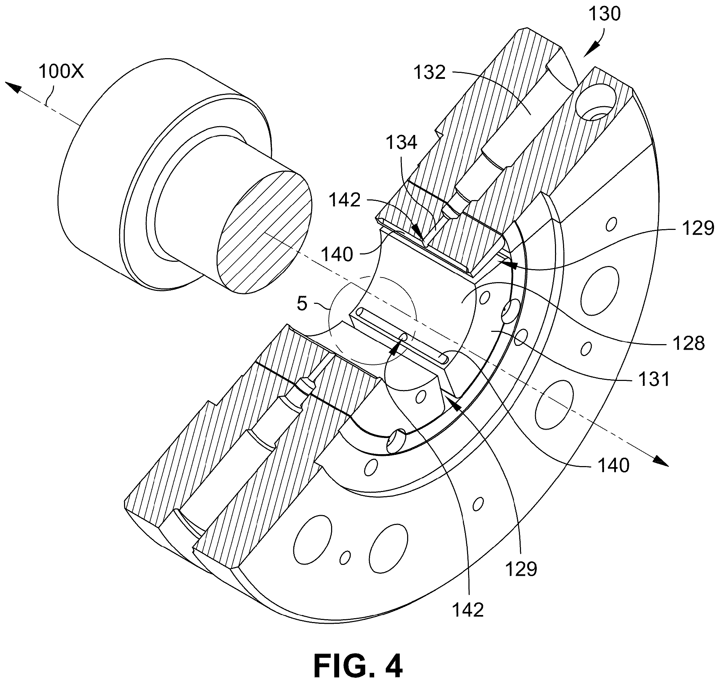

Referring to FIGS. 3 and 4, lubricant flooding the lubrication ring 114 is directed to the shaft 110 through a lubrication port 130. The lubrication port 130 includes a casing channel 132 in the casing section 124, a connecting nozzle 133, and a pad channel 134 in the pad section 126. In embodiments, the connecting nozzle 133 may comprise a flexible material, including but not limited to a silicone, a rubber, and/or other elastomers or flexible polymers. The connecting nozzle 133 may include a threaded fitting as shown in FIG. 3 or may be coupled between the lubrication port 130 as an interference fit. In other embodiments, the connecting nozzle 133 may be machined directly, using EDM, between the casing channel 132 and the pad channel 134.

As shown, each flexing pivot pad 128 includes and defines a leading-edge groove 140 in the inner surface 116, parallel to the rotating axis 110X. The leading-edge groove is fluidly connected to the respective lubrication port 130 through opening 142. When flooded, the leading-edge groove lubricates the rotating shaft 110 directly, before the cooler lubricant entering the gearbox 108 is mixed with hot lubricant that has already been in contact with the flexing pivot pads 128. The fresh lubricant provides a barrier to prevent hot lubricant transfer between adjacent flexing pivot pads 128. This direct supply of fresh lubricant inhibits heat retention between the rotating shaft 110 and the inner surface 118 of the bearing 120. Specifically, in some embodiments, the direct supply of lubricant may partially reduce heat retention between the rotating shaft 110 and the inner surface 118 of the bearing 120. In other embodiments, the direct supply of lubricant may fully prevent heat retention between the rotating shaft 110 and the inner surface 118 of the bearing 120.

In the embodiment shown in FIG. 4, the leading-edge groove 140 on each flexing pivot pad 128 has the same width and depth. However, in other embodiments, at least one leading-edge groove 140 may have a different width and/or depth than the other leading-edge grooves 140. For example, a loaded flexing-pivot pad 128, or a pad that supports a significant portion of the load of the rotating shaft 110, may have a wider and/or deeper leading-edge groove 140 than an unloaded flexing pivot pad 128, or a pad that does not support a significant portion of the load of the rotating shaft 110.

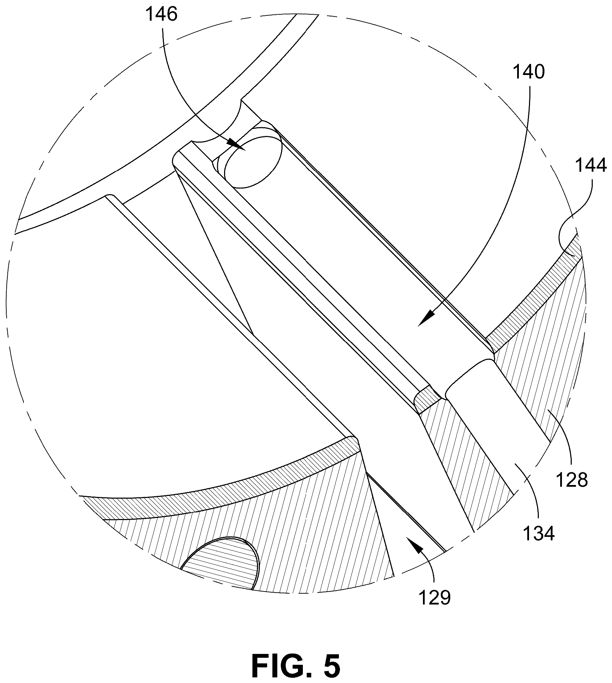

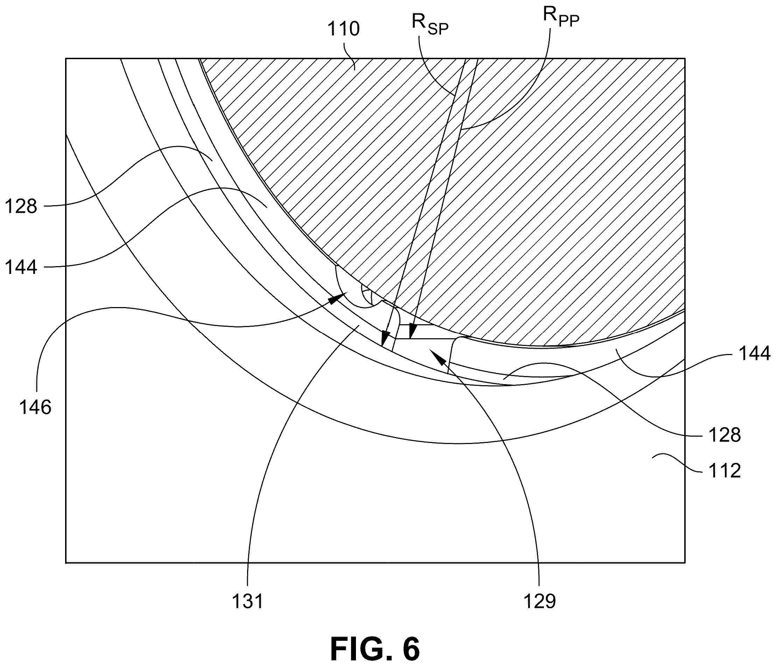

As shown in FIGS. 5 and 6, the leading-edge groove 140 extends toward a distal end 131 of the flexing pivot pad 128. The leading-edge groove 140 may be open to the distal ends 131 of the flexing pivot pad 128, which allows the lubricant flowing through the flexing pivot pad 128 and through the leading-edge groove 140 to evacuate towards the distal end 123 of the bearing housing. The lubricant that evacuates through the distal ends 131 of the flexing pivot pad 128 returns to the gearbox 108 and is delivered to the lubricant cooling system 60 (FIG. 7) to be cooled down and recirculated into the drive system 102 or another location of the compressor system 100.

As shown, the inner surface 118 of the EDM bearing 120 includes a sleeve 144 configured to reduce friction between the EDM bearing 120 and the rotating shaft 110. In embodiments, the sleeve 144 is formed from a material different from the material of the bearing housing 122. For example, in one embodiment, the bearing housing 122 and flexing pivot pads 128 are composed of a steel such as chrome steel, stainless steel, carbon steel; a ceramic such as a silicon nitride; a polymer, etc., or a combination thereof, while the sleeve 144 is composed of a tin-based babbitt. In other embodiments, the babbitt metal may be another alloy including at least one of tin, copper, antimony, etc., or a combination thereof. The sleeve 144 may be coupled to the inner surface 118 of the bearing prior to the leading-edge groove 140 being machined into the flexing pivot pad 128. In other embodiments, the EDM bearing 120 does not include a sleeve 144. In further embodiments, the sleeve 144 includes a sleeve groove 146 that allows the lubricant flooding the leading-edge groove 140 to evacuate and freely flow toward the seal plate 112.

Referring again to FIG. 1, seal plates 112 are disposed at the distal ends 131 of the flexing pivot pads 128. The flexing pivot pads are restrained between two (2) seal plates 112, where the seal plates 112 are configured to keep the lubricant flowing in the flexing pivot pads 128 from leaking from the bearing 120 before it can remove heat from the bearing 120. The seal plates 112 further allow for a controlled evacuation of the lubricant flowing through the flexing pivot pads 128. For example, in embodiments, an inner radius R_{SP} of the seal plates 112 with relation to the rotational axis 110X is larger than an inner radius R_{PP} of the flexing pivot pads 128 with relation to the rotational axis 110X to allow the lubricant to flow freely through the flexing pivot pad 128 into the leading-edge groove 140 and evacuate to the gearbox 108.

In the embodiment shown in FIG. 7, the compressor system 100 includes four (4) compressor airends 50. However, it should be understood that in other embodiments, the compressor system 100 may include fewer compressor airends 50 or more compressor airends 50. It should also be understood that the EDM bearing 120 may be used in other applications and is not limited to be used in a compressor system 100.

While the subject matter has been illustrated and described in detail in the drawings and foregoing description, the same is to be considered as illustrative and not restrictive in character, it being understood that only some embodiments have been shown and described and that all changes and modifications that come within the spirit of the subject matter are desired to be protected. In reading the claims, it is intended that when words such as "a," "an," "at least one," or "at least one portion" are used there is no intention to limit the claim to only one item unless specifically stated to the contrary in the claim. Unless specified or limited otherwise, the terms "connected," and "coupled" and variations thereof are used broadly and encompass both direct and indirect mountings, connections, supports, and couplings. Further, "connected" and "coupled" are not restricted to physical or mechanical connections or couplings.

## Claims

1. An Electrical Discharge Machined (EDM) bearing comprising:
a housing extending around a rotational axis, the housing defining at least one lubricant port connected to an outer circumference of the housing and extending radially to the rotational axis;
an EDM flexing pivot pad machined from the housing, the EDM flexing pivot pad configured to provide support to a rotating shaft rotating around the rotational axis in a first direction, the EDM flexing pivot pad having a lubricant channel aligned with the lubricant port; and
a leading-edge groove machined on an inner circumference of the EDM flexing pivot pad and in fluid communication with the lubricant channel, the leading-edge groove configured to deliver lubricant to the rotating shaft.

2. The EDM bearing as recited in claim 1, wherein the leading-edge groove is disposed on a leading edge of the EDM flexing pivot pad, and the lubricant is delivered directly between the rotating shaft and the EDM flexing pivot pad.

3. The EDM bearing as recited in claim 1, wherein the lubricant channel includes a casing channel defined through a casing section of the housing, and a pad channel defined through the EDM flexing pivot pad, and where the casing channel and the pad channel are coupled by a connecting nozzle.

4. The EDM bearing as recited in claim 3, wherein the connecting nozzle is directly machined into the EDM flexing pivot pad.

5. The EDM bearing as recited in claim 1, further including a seal plate configured to retain the lubricant flowing through the EDM flexing pivot pads.

6. The EDM bearing as recited in claim 5, wherein an internal radius of the seal plate with reference to the rotational axis is greater than an internal radius of the EDM flexing pivot pad with reference to the rotational axis.

7. The EDM bearing as recited in claim 5, further comprising a sleeve disposed between the EDM flexing pivot pad and the rotating shaft.

8. The EDM bearing as recited in claim 7, wherein the sleeve includes a sleeve groove aligned with the leading-edge groove, the sleeve groove configured to evacuate the lubricant flooding the leading-edge groove towards the seal plate.

9. A compressor system comprising:
a compressor airend configured to be rotated around a rotational axis; and
a drive system configured to drive the compressor airend, the drive system including:
a rotating shaft coupled to the compressor airend, and
an Electrical Discharge Machined (EDM) bearing as recited in any preceding claim, the EDM bearing configured to support the rotating shaft.
